# EUROPEAN PATENT SPECIFICATION

(11) **EP 2 779 033 B1**
(45) Date of publication and mention of the grant of the patent: **22.08.2018**
(21) Application number: 13005281.4
(22) Date of filing: 08.11.2013
(51) Int. Cl.: G06K 19/077, H01Q 1/22, H01Q 13/18

(54) **Shielded cavity backed slot decoupled RFID tags**
Abgeschirmte hohlraumschlitzentkoppelte RFID-Etiketten
Étiquettes RFID découplées par fente à cavité blindée

(30) Priority: 15.03.2013 US 201313843326
(43) Date of publication of application: 17.09.2014
(73) Proprietor: Omni-ID Cayman Limited, Grand Cayman KY1-1108 (KY)
(72) Inventor: Mohajer-Iravani, Bharak, Webster, NY 14580 (US); Vilner, Charles, Crawley RH107JF (GB)
(74) Representative: Müller-Boré & Partner Patentanwälte PartG mbB

(56) References cited:
- WO-A1-2007/041017
- WO-A1-2008/075039
- GB-A- 2 439 124
- US-A1- 2010 045 025

## Description

This invention includes shielded decoupled RFID tags including a decoupler and a tag wherein the decoupler includes a three dimensional cavity formed by conductive material walls, a tag located in the cavity and at least one slot in the conductive material wall that creates a passage for RF communication signals to pass into and/or out of the three dimensional cavity.

Today, there are decoupled RFID tags in the market built based on cavity resonators which perform well if placed on a surface that could degrade tag performance such as a metallic surface. In those designs, the cavity resonators to a good extent decouple tags ("tags" are generally a combination of an antenna and integrated circuit (IC) such as loop-IC or dipole-IC tag or tags can be a cavity resonator decoupled IC if the tag is made of a cavity resonator and IC) from the background surface. Therefore, these types of tags in contrast to traditional dipole tags do not fully lose their performance when they are placed on metallic objects.

The cavity resonators in these designs are open in two or more surfaces (mainly, the side surfaces are open in existing samples) and are considered open type cavity resonators. Therefore, the radiated fields from tag (or into tag) pass through all these openings. The fields directly interact with surrounding materials, therefore, the read ranges and the frequency bands of operation change. Hence, the tags based on open cavity resonators are insensitive to environment from the point of view that they do not lose fully their performance by the changes of environment characteristics and they perform acceptably and reliably in different conditions. However, the current RFID tags built on cavity resonators still experience undesirable changes in operating frequencies and loss in read ranges. This sensitivity (change in frequency and read range) causes problems when the sensitivity of reader device is low (the minimum power level which is detectable by reader is high) or quite consistent tag is required in different environment. Therefore, there is a need for RFID tags based on cavity resonators that do not suffer from this frequency and/or read range sensitivities.

GB 2 439 124 A describes an electromagnetic radiation decoupler. Independent claim 1 is delimited against this document. WO 2008/075039 A1 discloses an apparatus which is capable of enhancing an incident electric field to drive an electromagnetic tag into operation and which comprises a resonant dielectric cavity.

US 2010/0045025 A1 discloses one and two-part printable EM tags.

WO 2007/041017 A1 discloses a radiopharmaceutical system and a method utilizing radio-frequency identification tags.

The above need for RFiD tags based on cavity resonators that do not suffer from this frequency and/or read range sensitivities is satisfied by providing the embodiments as characterized in the claims.

One aspect of this invention is a shielded decoupled RFID tag comprising a three dimensional cavity surrounded by conductive material walls; a single slot in the conductive material wall that creates a passage for RF communication signals to pass into and/or out of the three dimensional cavity; and an RFID tag located in the cavity wherein the RFID tag includes a chip and antenna. An arrangement not covered by the claims provides at least one shielded metallic cavity with at least one slot opening where the opening geometry is designed to allow for the smooth passage of RF communication signals in the tag frequency range of operation while limiting the interaction of signal waves with the surrounding environment (or decouples the RF component from the surrounding environment) to lower the sensitivity to environment characteristic.
Figure 1 is an embodiment of a shielded decoupled RFID tag of this invention that has a tubular cavity;
Figure 2 is an embodiment of a shielded decoupled RFID tag of this invention that has a cavity formed by square shaped conductive walls;
Figure 3 is diagram of components of a shielded decoupled RFID tag embodiment of this invention;
Figure 4 is a diagram of the components of an alternative embodiment of a shielded decoupled RFID tag where the RFID tag is fabricated using a printed circuit board method;
Figures 5a-5c are features of a shielded decoupler RFID tag embodiment of this invention where Figure 5a is a view including the internal features of the RFID tag; Figure 5b is a view of the RFID tag decoupler; and Figure 5c is a view of the tag (IC/antenna structure) which is located in cavity (18) of the shielded decoupled RFID tag; and
Figure 6 is a read range response plot for normal incidence versus frequency for the shielded decoupled RFID tag of Figure 5 wherein the RFID tag is placed in three different operating environments: (i) RFID tag in free space, (ii) RFID tag mounted on a small metallic surface, and (iii) RFID tag mounted on a large metallic surface.

The present invention relates to shielded decoupled RFID tags that include decouplers having a cavity structure formed by conductive walls that holds a tag where the cavity structure further includes an opening or a slot that allows RF communication signals between the tag and reader to pass through the slot.

The term "tag" is used herein to refer to an EM tag. EM tags are devices that typically include a chip and antenna structure that manipulates electromagnetic radiation or communication signals such as RFID devices. The tags used in this invention may be passive tags, active tags or a battery assisted passive tags.

The term "decoupler" as used herein refers to the slotted cavity structure without a tag.

The term "RFID tag" is used herein to refer to the combination of a decoupler and tag.

As noted above, the shielded decoupled RFID tags of invention are built to enclose a variety of tags including the combination of an IC and metallic pattern antenna, such as loop or dipole antenna which transfers signal from/to the iC through radiating. The "tag" is accessible to the surrounding environment outside of the decoupler cavity only through a slot or slots in the decoupler which are located preferably only on one planar surface (wall) of the cavity.

The structure of cavity with slot(s) is referred to herein as the decoupler. The electromagnetic fields emitted by an RFID tag reader have access to the tag and vice versa only through the slot opening. The slot opening is preferably positioned on a cavity surface that is not positioned directly on or in close contact with the surface of the object being RFID tagged. Preferably, the slot is located in a decoupler cavity surface that is opposite to the decoupler mounting surface. The slot shape is arbitrary. However, for ease of manufacture, the slot will typically have a define geometric shape such as, for example, a circle, an annulus, a square, a rectangle a triangle, a cross, x-shaped, t-shaped, n-shaped and so forth. Combinations of geometric shapes are also possible.

All other decoupler surfaces are preferably solid walls that isolate the cavity from direct interaction with external electromagnetic fields directed at the walls. The term "solid" as used herein refers to conductive walls that are physically solid - the conductive material in the wall is continuous without interruption except for the slot(s). The term "solid" also refers to walls that are essentially impervious to electromagnetic signals at the RFID tag operating frequency.

It is noted that a tag, once positioned in the cavity, is highly isolated but not completely isolated as the radiated external electromagnetic fields induce currents (indirect interactions) on the surfaces of walls of the shielded cavity and these currents can interact with the surrounding environment and especially with the constituent materials of the object being tagged. However, these indirect interactions with electromagnetic fields are fewer than the direct interactions with EM fields. Therefore, the sensitivity of tags located in the cavity to surrounding environment such as the materials of the objects being tagged is reduced significantly, i.e., the tag is significantly decoupled from the surface of the object to which the shielded cavity backed slot decoupler is attached. For example, a tag positioned in proximity to or far from a metallic surface will exhibit similar little variation in frequency and read range. These changes are minor when compared to the change in current commercially available tag designs.

The shielded decoupled RFID tags of this invention can be tailored to be used in various resonance scenarios. For example, the decoupler and tags can be designed such that the tag is in resonance within the operating frequency band while the slot is not in resonance. Alternatively, the decoupler and tag can be designed so the slot is only in resonance within the operating frequency band of the tag. In still another alternative, the decoupler and tag are designed such that the slot and tag are both in resonance within the operating frequency band. In yet another alternative, the decoupler and tag are designed such that the slot, tag, and shielded cavity are all in resonance within the operating frequency band. Finally the decoupler and tag combinations of this invention can include a second metallic structure (such as additional loop or dipole) included inside the shielded cavity that are in resonance as well as tag, slot, and shielded cavity within the operating frequency band.

The shielded cavity backed slot decouplers of this invention can include walls made of any conductive material. An optional material or materials can be used to fill the decoupler cavity. The filling material(s) - if used - can be air or any dielectric materials, magnetic materials, or magneto-dielectric material (also known as artificial magnetic material build based on the combination of dielectric host and metallic inclusions), and any combination thereof.

The filling materials can be placed in the cavity in bulk or in layers referred to herein as spacers. Moreover, the spacers can be located inside the three dimensional cavity and/or on top of slotted surface covering the slot. Such spacer placement may happen for different purposes including miniaturizing the size of structure, increasing the radiation gain, changing or controlling the directivity angle and beam forming. The spacers can be made of any useful material including any dielectric material, magnetic material, or magneto-dielectric material. When the spacer is located inside the cavity, the dielectric material may be air.

In addition, the walls of the cavity structure can include a dielectric material backing and/or the walls can be, in addition to including a conductive material, be loaded with any dielectric materials, magnetic materials, magneto-dielectric material artificial magnetic materials and combinations thereof.

The shielded decoupled RFID tags of this invention include a tag located inside the decoupler cavity. To allow for a strong transfer of RF/microwave communication waves between a reader and the shielded decoupled RFID tags at the tag operating frequency, to allow for a strong pattern, the electromagnetic field patterns associated to the mode of operation of antenna should be coupled to the electromagnetic field patterns associated to the mode of operation of the slot. For instance, in the shielded decoupled RFID tags, the first resonating mode of the tag antenna may couple to the first resonating mode of the slot. In another design, the second resonating mode of antenna may couple to the first resonating mode of the slot while the first resonating mode of antenna is decoupled to the first resonating mode of slot. If the field patterns are orthogonal, then the slot and the antenna are completely decoupled and the RF microwave waves do not pass through the slot to the antenna. If the field patterns are parallel, then the slot and the antenna can be coupled. In this case, if the location of antenna in the cavity is tuned then it is possible to adjust the strength of coupling between slot and antenna so that it is strongly coupled and preferably coupled sufficiently to power the IC chip.

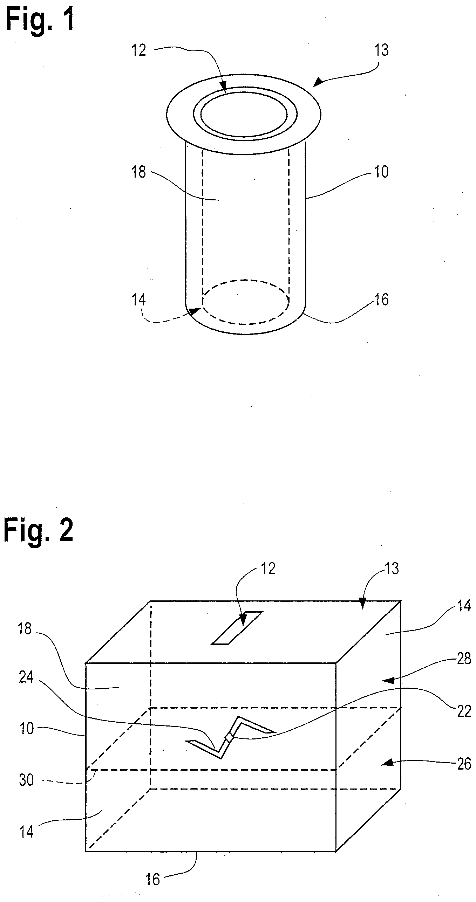

The Figures show some possible embodiments of shielded cavity backed slot RF decoupler and RFID tags of this invention. A shielded cavity backed slotted RF decoupler is shown in Figure 1. The decoupler (10) is tubular and includes cavity (18) formed by walls including a top wall (13), side walls (14) and a bottom wall (16) each contiguous with one another and each made of a conductive material. At the top wall (13) is an annular slot (12) that facilitates the passage of RF microwave communication signals into and out of cavity (18). Decoupler (10) includes a mounting surface that is bottom wall (16) that is opposite to slot (12).

Figure 2 is another embodiment of a shielded decoupled RFID tag that includes a decoupler (10) having shielded walls forming a cavity (18). The decoupler includes a plurality of conductive rectangular walls - top wall (13), side walls (14) and bottom wall (16) forming a cavity (18). The decoupler includes a rectangular slot (12) opened on the top wall (13) that allows for the passage of RF microwave communication signals into and out of cavity (18). A tag including a dipole antenna (24) and its associated iC (22) is located at an interface (30) between a first dielectric spacer (26) and a second dielectric spacer (28) all of which are located in cavity (18).

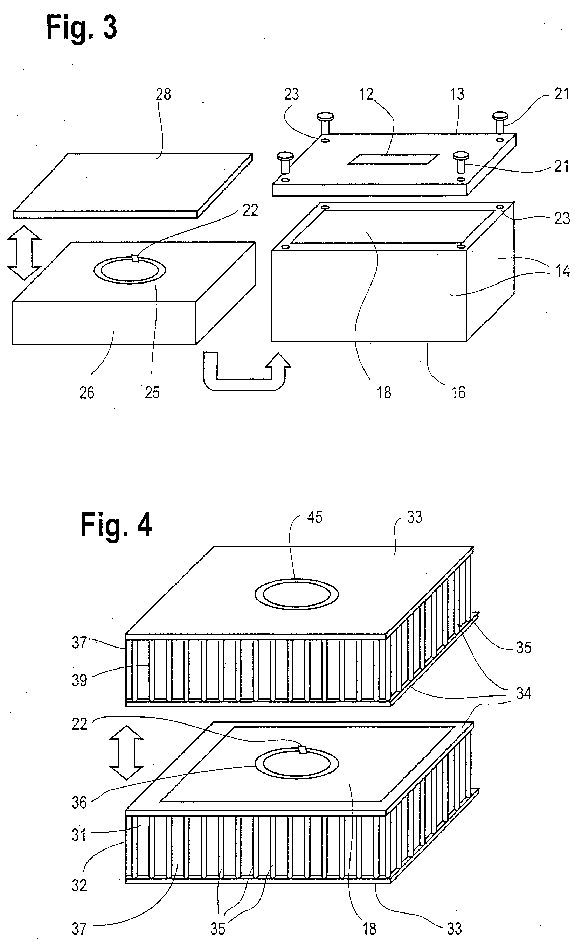

Figure 3 shows a method for constructing a shielded decoupled RFID tag of this invention. The method uses a decoupler (10) having a cavity (18) formed by the combination of conductive rectangular walls including a top wall (13) side walls (14) and a bottom wall (16) that also functions as a device mounting surface. A tag including a loop antenna (25) and an IC chip (22) is sandwiched between first and second dielectric material spacers (26, 28). The dielectric sandwich is then placed in cavity (18). The shielded decoupled RFID tag is then completed by placing the metallic top wall (13) over the open top and attaching the top wall (13) to side walls (14) with screws (21) directed through holes (23) in top wall (13) and in side walls (14). Top wall (13) can be attached to side walls (14) by any other attaching mechanism known in the art such as by using an adhesive. Top wall (13) includes a rectangular slot (12) that facilitates the passage of RF microwave communication signals into and out of cavity (18). First and second dielectric spacers (26, 28) can optionally be attached to one another at interface (30) with an adhesive material and the tag can similarly be adhered to one or both of the spacers.

Figure 4 is yet another embodiment of a shielded decoupled RFID tag of this invention that is prepared via planar fabrication methods using two sheets of circuit board laminates where each sheet includes multiple material layers. The first PCB board (32) includes a dielectric material core (31) having a uniform metallic layer (33) and a top metallic layer that has been partially removed by etching to form a thin conductive perimeter strip (34). The side walls (37) of PCB board (32) include a plurality of cioseiy spaced metal (preferably copper) vias (35) which is also referred herein to as a fence of vias. The plurality of metal vias (35) in combination with the dielectric core material form side walls (37). Each metallic via (35) is attached at one end to uniform metallic layer (33) and at a second end to conductive perimeter strip (34). In side wall (37), the distance between adjacent metallic strips (35) is set such that together, the metal vias (35) essentially prevent RF signals at the operating frequency of the tag to pass through side walls (37) and into cavity (18). In this embodiment, the metal vias (35) of side walls (37) act much like walls that are made from a continuous conductive material with respect to the transfer of field to and from cavity (18). It is preferred that the space between metal vias (35) is less than 1/15^{th} of operating wavelength.

Second PCB board (39) is similar in construction to the first PCB board (32) with the thin conductive perimeter strips (34) of each abutting each other to form a small cavity (18). A tag including a ring loop (36) is etched on partially removed metallic top layer of first printed circuit board (32) and IC chip (22) is then attached to it. Similarly, a ring-shaped slot (45) is etched open on the uniform metallic layer (33) of second PCB board (39). Finally, the first and second PCB boards (32, 39) are united using a prepreg layer or by using other adhesive materials (not shown) to bond the PCB boards together to form a single multilayer shielded decoupled RFID tag.
As noted above, for the frequency band of operation, the passage of RF communication signals will only be through ring slot (45).

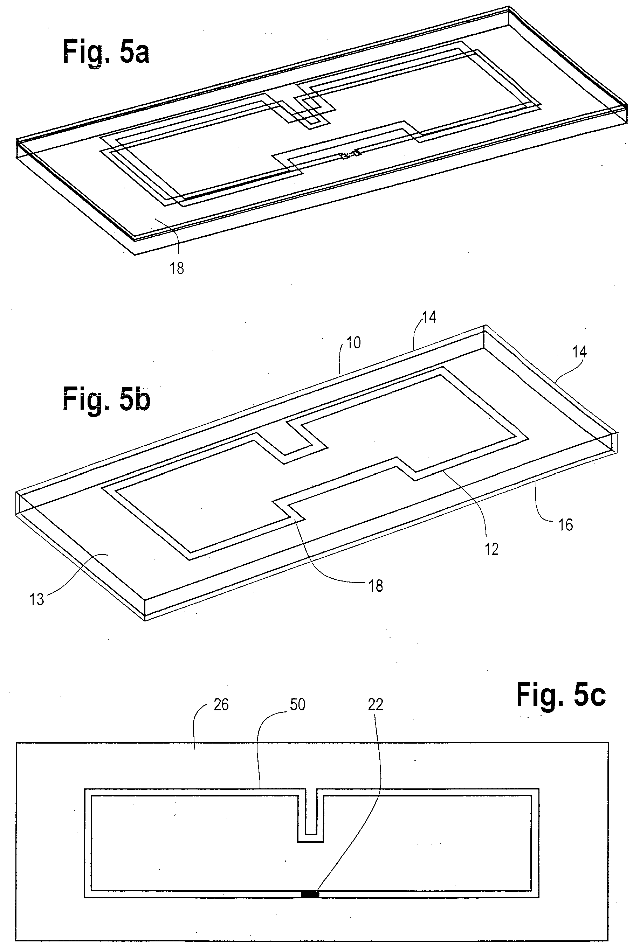

Figures 5a-5c show various features of yet another embodiment of a shielded decoupled RFID tag of this invention. It should be noted that the RFiD tag show in Figures 5a-5c will typically be clad entirely in aluminum or copper foil except for slot structure (52) shown in Figure 5b. Figure 5a is a view of the decoupler cavity (18) in which the internal features are identified in hatched lines. Figure 5b is a view of the RFID tag decoupler having conductive walls including top wall (13) side walls (14) and bottom wall (16) as well as cavity (18) and slot (12). It is not necessary for slot (12) to have the same geometry or shape as loop antenna (50).

Figure 5c is a view of a cross-section of cavity (18) that includes a loop antenna structure (50) and IC chip (22) that is associated with a first dielectric spacer (26).

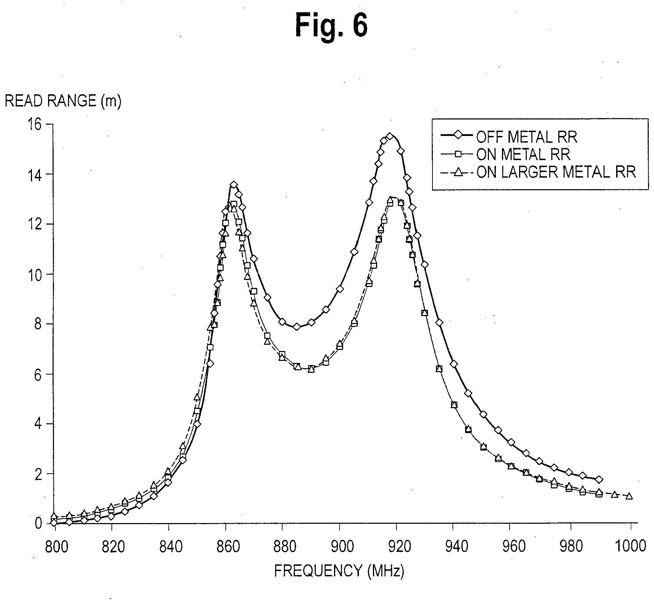

Figure 6 is a plot of the read range response (RR) for normal incidence versus frequency for the shielded decoupled RFID tag shown in Figure 5 when the RFID tag is exposed to three different environments: (i) RFID tag in free space or "off metal", (ii) RFID tag mounted on a metallic surface, and (iii) RFID tag mounted on a large metallic surface. The plotted results demonstrate that the sensitivity of the shielded decoupled RFID tag of this invention to the surrounding environment is very low. The on-metal/off-metal responses show negligible changes in the resonant frequencies of the structure (about 2 MHz). Also, the change in read range is small (maximum of 18%). As the frequency response of the tag in Figure 6 shows the decoupled RFID tags of this invention may be global. The antenna and slot of the shielded decoupled RFID tag of Figure 5 are in resonance in the operating frequency band of the RFID tag. In other embodiments, the cavity can be designed to be resonant at the operating frequency of the tag.

We have further discovered that the field radiation pattern of shielded cavity backed slot RF decouplers of this invention have a strong main-lobe beaming toward the upper hemisphere (the hemisphere has boundary with the slotted surface of cavity). The back side lobe toward lower hemisphere and side lobes causing interaction mainly with the mounting surface are comparatively very small. The shielded cavity backed slot RF decouplers of this invention may be designed to create omni-directional radiation pattern in upper hemisphere which can send and receive RF signals essentially equally in all directions/angles or it may be designed to be more directional in upper hemisphere with methods of beamforming or by using artificial magnetic materials which can send and receive for the designed angles. For example, if a decoupled RFID tag is designed based on the shielded cavity backed slot RF decoupler with omni-directional radiation pattern in upper-hemisphere then it provides quite similar read range in all angles of incidence, i.e., design is insensitive to the angle of incidence.

The dielectric materials used in some embodiments of this invention may be selected from any dielectric materials known now or discovered in the future to be useful in manufacturing RFID tags. Non-limiting examples of useful dielectric materials include natural or manmade fibres, plastics, cellulose, glass or ceramics.

The conductive materials used in the embodiments may be any material that is known to be conductive such as copper, aluminum foil and conductive inks.

The shielded decouplers of this invention are useful in conjunction with EM tags which manipulate electromagnetic communication signals into or from identification devices such as RF tags, also known as RFID tags. Such tags use a structure to decouple (i.e. isolate) the tag from surfaces that degrade its read performance, such as metallic surfaces, surfaces of liquid containers and wet surfaces.

The shielded decoupled RFiD tags of this invention are intended to be permanently or reversibly attached to an object. The attachment may be made by any methods known in the art. A particularly useful method is to apply an adhesive to the decoupler mounting surface and cover it with a protective paper sheet. The paper sheet can then be removed to expose the adhesive layer and then adhesively attach the RFID tag to the object surface. Alternatively, the shielded decoupled RFID tags of this invention can include mounting holes, they can be constructed into the surface of the object to which there are being attached and so forth.

The shielded decoupled RFID tags of this invention may include a non-conductive housing covering the device. The non-conductive housing can even cover the slot without interfering with the device operation. The housing can be made of any materials that are used to protect and/or house RFID tags. The housing may be a plastic or paper material that can be printed on or it can be a pre-printed material. An adhesive will typically be used to attach the housing to the devices of this invention.

As noted above, an antenna is typically a component of the tag associated with the decouplers of this invention. Antennas, if used, may be any antenna known in the art to be useful with decoupled EM tags. The tags used in the present invention may only require a small antenna. As the decoupler couples radiation into the metallic cavity and produces a high electric field, a tag located in the cavity will be operating in an area of high field and may not require a large tuned antenna. Thus the decoupler of the present invention can be used with a so called low Q tag. The low Q tag, which, including an antenna may be only slightly larger than the chip itself, may be placed in any decoupler cavity of this invention.

The invention has been described in an illustrative manner. It is to be understood is that the terminology, which has been used, is intended to be in the nature of words of description rather than limitation. The invention is defined by the appended claims.

## Claims

1. A shielded decoupled RFID tag comprising:
a decoupler (10) including a three dimensional cavity (18) having conductive material walls;
a tag located in the three dimensional cavity (18); and
at least one slot (12, 45) in the conductive material wall that creates a passage for RF communication signals in the tag frequency range of operation to pass into and/or out of the three dimensional cavity (18),
**characterized in that**
the three dimensional cavity (18) is surrounded by the conductive material walls.

2. The shielded decoupled RFID tag of claim 1 wherein the at least one slot (12, 45) is a single slot.

3. The shielded decoupled RFID tag of any preceding claim wherein the tag includes an IC chip (22) and antenna (24, 25, 50).

4. The shielded decoupled RFID tag of any of claims 1-2 wherein the tag is the combination of an IC chip (22) and resonator.

5. The shielded decoupled RFID tag of any preceding claim wherein the tag is positioned with respect to the slot (12, 45) such that a coupled field from the slot (12, 45) to the antenna (24, 25, 50) powers the IC (22).

6. The shielded decoupled RFID tag of any preceding claim wherein the tag is positioned within the cavity (18) at location where the field from the slot (12, 45) to the antenna (24, 25, 50) is strongly coupled.

7. The shielded decoupled RFID tag of any preceding claim wherein one or more spacers (26, 28) are located between the tag and the slot (12, 45).

8. The shielded decoupled RFID tag of claim 7 wherein the one or more spacers (26, 28) are made from air, dielectric materials, magnetic materials, artificial magnetic materials, magneto-dielectric materials and combinations thereof.

9. The shielded decoupled RFID tag of any preceding claim wherein one or more spacers (26, 28) are placed over the slot (12, 45).

10. The shielded decoupled RFID tag of claim 9 wherein the one or more spacers (26, 28) are made from dielectric materials, magnetic materials, artificial magnetic materials, magneto-dielectric materials or combinations thereof.

11. The shielded decoupled RFID tag of any preceding claim wherein a housing made of a non-conductive material covers an outside surface of the conductive material walls.

12. The shielded decoupled RFID tag of claim 11 wherein the non-conductive material housing covers the slot (12, 45).

13. The shielded decoupled RFID tag of claims 11 or 12 wherein the non-conductive material housing includes a wall portion that is covered with a mounting adhesive.

14. The shielded decoupled RFID tag of any preceding claim wherein the slot (12, 45) geometry is arbitrary.

15. The shielded decoupled RFID tag of any preceding claim wherein the slot (12, 45) geometry is selected from a circle, an annulus, a square, a rectangle a triangle and a cross.

16. The shielded decoupled RFID tag of any preceding claim wherein a material substantially fills the three dimensional cavity (18).

17. The shielded decoupled RFID tag of any preceding claim wherein the conductive material walls essentially prevent RF signals at the operation frequency from entering the cavity (18).

18. The shielded decoupled RFID tag of any preceding claim wherein the electromagnetic field patterns associated with the slot (12, 45) and antenna (24, 25, 50) are coupled.

19. The shielded decoupled RFID tag of any preceding claim wherein the slot (12, 45) and the cavity (18) are all resonant at the operating frequency of the tag.

20. The shielded decoupled RFID tag of any preceding claim wherein the decoupler (10) includes an outside wall portion that includes a mounting adhesive.

21. The shielded decoupled RFID tag of any preceding claim wherein the tag is selected from a passive tag, an active tag or a battery assisted passive tag.

## Patentansprüche

1. Abgeschirmtes entkoppeltes RFID-Kennzeichen, umfassend:
einen Entkoppler (10), einschließend eine dreidimensionale Kavität (18) mit Wänden aus leitfähigem Material;
ein Kennzeichen, angeordnet in der dreidimensionalen Kavität (18); und
mindestens ein Schlitz (12, 45) in der Wand aus leitfähigem Material, welcher einen Durchgang erzeugt, damit RF-Kommunikationssignale in dem Arbeitsfrequenzbereich des Kennzeichens in die und/oder aus der dreidimensionalen Kavität (18) gelangen können,
**dadurch gekennzeichnet, dass**
die dreidimensionale Kavität (18) von den Wänden aus leitfähigem Material umgeben ist.

2. Abgeschirmtes entkoppeltes RFID-Kennzeichen nach Anspruch 1, wobei der mindestens eine Schlitz (12, 45) ein einzelner Schlitz ist.

3. Abgeschirmtes entkoppeltes RFID-Kennzeichen nach einem der vorhergehenden Ansprüche, wobei das Kennzeichen einen IC-Chip (22) und eine Antenne (24, 25, 50) einschließt.

4. Abgeschirmtes entkoppeltes RFID-Kennzeichen nach einem der Ansprüche 1-2, wobei das Kennzeichen die Kombination von einem IC-Chip (22) und einem Resonator ist.

5. Abgeschirmtes entkoppeltes RFID-Kennzeichen nach einem der vorhergehenden Ansprüche, wobei das Kennzeichen derart relativ zu dem Schlitz (12, 45) angeordnet ist, dass ein gekoppeltes Feld von dem Schlitz (12, 45) zu der Antenne (24, 25, 50) den IC (22) versorgt.

6. Abgeschirmtes entkoppeltes RFID-Kennzeichen nach einem der vorhergehenden Ansprüche, wobei das Kennzeichen innerhalb der Kavität (18) an einem Ort angeordnet ist, an dem das Feld von dem Schlitz (12, 45) zu der Antenne (24, 25, 50) stark gekoppelt ist.

7. Abgeschirmtes entkoppeltes RFID-Kennzeichen nach einem der vorhergehenden Ansprüche, wobei ein oder mehrere Abstandshalter (26, 28) zwischen dem Kennzeichen und dem Schlitz (12, 45) angeordnet sind.

8. Abgeschirmtes entkoppeltes RFID-Kennzeichen nach Anspruch 7, wobei der eine oder die mehreren Abstandshalter (26, 28) aus Luft, dielektrischen Materialien, magnetischen Materialien, künstlichen magnetischen Materialien, magnetodielektrischen Materialien und Kombinationen daraus hergestellt sind.

9. Abgeschirmtes entkoppeltes RFID-Kennzeichen nach einem der vorhergehenden Ansprüche, wobei ein oder mehrere Abstandshalter (26, 28) über dem Schlitz (12, 45) platziert sind.

10. Abgeschirmtes entkoppeltes RFID-Kennzeichen nach Anspruch 9, wobei der eine oder die mehreren Abstandshalter (26, 28) aus dielektrischen Materialien, magnetischen Materialien, künstlichen magnetischen Materialien, magnetodielektrischen Materialien oder Kombinationen daraus hergestellt sind.

11. Abgeschirmtes entkoppeltes RFID-Kennzeichen nach einem der vorhergehenden Ansprüche, wobei ein Gehäuse, hergestellt aus einem nicht leitfähigen Material, eine äußere Oberfläche der Wände aus leitfähigem Material bedeckt.

12. Abgeschirmtes entkoppeltes RFID-Kennzeichen nach Anspruch 11, wobei das Gehäuse aus nicht leitfähigem Material den Schlitz (12, 45) bedeckt.

13. Abgeschirmtes entkoppeltes RFID-Kennzeichen nach Anspruch 11 oder 12, wobei das Gehäuse aus nicht leitfähigem Material einen Wandbereich einschließt, welcher mit einem Montagehaftmittel bedeckt ist.

14. Abgeschirmtes entkoppeltes RFID-Kennzeichen nach einem der vorhergehenden Ansprüche, wobei die Geometrie des Schlitzes (12, 45) beliebig ist.

15. Abgeschirmtes entkoppeltes RFID-Kennzeichen nach einem der vorhergehenden Ansprüche, wobei die Geometrie des Schlitzes (12, 45) aus einem Kreis, einem Kranz, einem Quadrat, einem Rechteck, einem Dreieck und einem Kreuz ausgewählt ist.

16. Abgeschirmtes entkoppeltes RFID-Kennzeichen nach einem der vorhergehenden Ansprüche, wobei ein Material die dreidimensionale Kavität (18) im Wesentlichen ausfüllt.

17. Abgeschirmtes entkoppeltes RFID-Kennzeichen nach einem der vorhergehenden Ansprüche, wobei die Wände aus leitfähigem Material RF-Signale mit der Arbeitsfrequenz im Wesentlichen vom Eindringen in die Kavität (18) abhalten.

18. Abgeschirmtes entkoppeltes RFID-Kennzeichen nach einem der vorhergehenden Ansprüche, wobei die mit dem Schlitz (12, 45) und der Antenne (24, 25, 50) einhergehenden elektromagnetischen Feldmuster gekoppelt sind.

19. Abgeschirmtes entkoppeltes RFID-Kennzeichen nach einem der vorhergehenden Ansprüche, wobei sowohl der Schlitz (12, 45) als auch die Kavität (18) zu der Arbeitsfrequenz des Kennzeichens resonant sind.

20. Abgeschirmtes entkoppeltes RFID-Kennzeichen nach einem der vorhergehenden Ansprüche, wobei der Entkoppler (10) einen äußeren Wandbereich einschließt, welcher ein Montagehaftmittel einschließt.

21. Abgeschirmtes entkoppeltes RFID-Kennzeichen nach einem der vorhergehenden Ansprüche, wobei das Kennzeichen aus einem passiven Kennzeichen, einem aktiven Kennzeichen oder einem batteriegestützten passiven Kennzeichen ausgewählt ist.

## Revendications

1. Etiquette RFID blindée et découplée comprenant :
un découpleur (10) incluant une cavité tridimensionnelle (18) ayant des parois en matériau conducteur ;
une étiquette située dans la cavité tridimensionnelle (18) ; et
au moins une fente (12, 45) dans la paroi en matériau conducteur créant un passage pour les signaux de communication RF dans la gamme de fréquences de fonctionnement de l'étiquette pour entrer dans et/ou sortir hors de la cavité tridimensionnelle (18),
**caractérisé en ce que**
la cavité tridimensionnelle (18) est entourée par les parois en matériau conducteur.

2. L'étiquette RFID blindée et découplée de la revendication 1 dans laquelle l'au moins une fente (12, 45) est une unique fente.

3. L'étiquette RFID blindée et découplée de l'une quelconque revendication précédente dans laquelle l'étiquette comprends une puce électronique (22) et une antenne (24, 25, 50).

4. L'étiquette RFID blindée et découplée de l'une quelconque des revendications 1-2 dans laquelle l'étiquette est une combinaison d'une puce électronique (22) et d'un résonateur.

5. L'étiquette RFID blindée et découplée de l'une quelconque revendication précédente dans laquelle l'étiquette est située par rapport à la fente (12, 45) de sorte qu'un champ couplé allant de la fente (12, 45) à l'antenne (24, 25, 50) alimente la puce électronique (22).

6. L'étiquette RFID blindée et découplée de l'une quelconque revendication précédente dans laquelle l'étiquette est située à l'intérieur de la cavité (18) à une position où le champ allant de la fente (12, 54) à l'antenne (24, 25, 50) est fortement couplé.

7. L'étiquette RFID blindée et découplée de l'une quelconque revendication précédente dans laquelle un ou plusieurs espaceurs (26, 28) sont situés entre l'étiquette et la fente (12, 45).

8. L'étiquette RFID blindée et découplée de la revendication 7 dans laquelle l'un ou plusieurs espaceurs (26, 28) est fait d'air, de matériaux diélectriques, de matériaux magnétiques, de matériaux magnétiques artificiels, de matériaux magnéto-diélectriques et des combinaisons de ceux-ci.

9. L'étiquette RFID blindée et découplée de l'une quelconque revendication précédente dans laquelle l'un ou plusieurs espaceurs (26, 28) sont placés au-dessus la fente (12, 45).

10. L'étiquette RFID blindée et découplée de la revendication 9 dans laquelle l'un ou plusieurs espaceurs (26, 28) est fait de matériaux diélectriques, de matériaux magnétiques, de matériaux magnétiques artificiels, de matériaux magnéto-diélectriques et des combinaisons de ceux-ci.

11. L'étiquette RFID blindée et découplée de l'une quelconque revendication précédente dans laquelle un boîtier fait d'un matériau non-conducteur recouvre une surface externe des parois en matériau conducteur.

12. L'étiquette RFID blindée et découplée de la revendication 11 dans laquelle le boîtier en matériau non-conducteur recouvre la fente (12, 45).

13. L'étiquette RFID blindée et découplée des revendications 11 ou 12 dans laquelle le boîtier en matériau non-conducteur comprends une portion de paroi qui est recouverte d'un adhésif de montage.

14. L'étiquette RFID blindée et découplée de l'une quelconque revendication précédente dans laquelle la géométrie de la fente (12, 45) est arbitraire.

15. L'étiquette RFID blindée et découplée de l'une quelconque revendication précédente dans laquelle la géométrie de la fente (12, 45) est sélectionnée parmi un cercle, un anneau, un carré, un rectangle, un triangle et une croix.

16. L'étiquette RFID blindée et découplée de l'une quelconque revendication précédente dans laquelle un matériau rempli substantiellement la cavité tridimensionnelle (18).

17. L'étiquette RFID blindée et découplée de l'une quelconque revendication précédente dans laquelle les parois en matériau conducteur empêche essentiellement que des signaux RF à la fréquence de fonctionnement n'entrent dans la cavité (18).

18. L'étiquette RFID blindée et découplée de l'une quelconque revendication précédente dans laquelle les lignes de champs électromagnétique associés avec la fente (12, 45) et l'antenne (24, 25, 50) sont couplés.

19. L'étiquette RFID blindée et découplée de l'une quelconque revendication précédente dans laquelle la fente (12, 45) et la cavité (18) sont toutes deux en résonance à la fréquence de fonctionnement de l'étiquette.

20. L'étiquette RFID blindée et découplée de l'une quelconque revendication précédente dans laquelle le découpleur (10) comprend une portion de paroi externe comprenant un adhésif de montage.

21. L'étiquette RFID blindée et découplée de l'une quelconque revendication précédente dans laquelle l'étiquette est sélectionnée parmi une étiquette passive, une étiquette active ou une étiquette passive assistée par batterie.
